# EUROPEAN PATENT SPECIFICATION

(11) **EP 3 200 593 B1**
(45) Date of publication and mention of the grant of the patent: **14.08.2019**
(21) Application number: 15845644.2
(22) Date of filing: 02.10.2015
(51) Int. Cl.: A22C 11/00, A23L 33/00

(54) **FINE EMULSION SAUSAGES AND METHOD OF MAKING**
WÜRSTE MIT FEINER EMULSION UND VERFAHREN ZUR HERSTELLUNG
SAUCISSES À ÉMULSION FINE ET PROCÉDÉ DE FABRICATION

(30) Priority: 03.10.2014 US 201462059363 P; 13.03.2015 US 201562132680 P
(43) Date of publication of application: 09.08.2017
(73) Proprietor: DuPont Nutrition USA, Inc., Wilmington DE 19805 (US)
(72) Inventor: GARCIADIEZ, Raul, 1000 Brussels (BE); NIELSEN, Helge Henrik, 1411 Copenhagen K (DK)
(74) Representative: Murgitroyd & Company
(86) International application number: PCT/US2015/053707
(87) International publication number: WO 2016/054499

(56) References cited:
- WO-A2-2014/007630
- GB-A- 807 863
- US-A1- 2007 059 416
- US-A1- 2007 077 271
- US-A1- 2009 061 051
- US-A1- 2009 246 330
- US-A1- 2009 317 522
- US-B2- 7 323 202

## Description

### FIELD OF THE INVENTION

In one aspect, the present invention is directed to an alginate coated fine emulsion sausage in which the alginate coating exhibits enhanced adhesion to the sausage filling after cooking. In another aspect, the present invention is directed to a process for manufacturing such sausages.

### BACKGROUND OF THE INVENTION

Many common types of sausages, including frankfurters, are produced by processes wherein a casing is filled with a fine meat and/or vegetable emulsion. As is noted by the Food and Agricultural Organization in their document entitled "Production of Emulsion-Type Sausages", available on the FAO website (www.fao.org), "meat emulsions" are not true emulsions, but are batters comprising finely chopped meat, fatty tissue and water or ice. The use of such meat emulsions is desirable from a commercial standpoint as this facilitates the rapid production of extruded products. Even in smaller scale production, the use of meat emulsions is desirable as such emulsions readily effectively permit casings to be filled to maximum capacity. This is important in order to ensure uniform product as well as to avoid shriveled products which are unacceptable from a consumer perspective.

Emulsion sausages have traditionally employed natural casings originating from the intestines of sheep and other animals. Such materials possess many desirable features such as the appropriate brittleness and strength to produce the desired "snap" or "knack" sound when they are cut or broken. This property, also described as "bite", is well known to those of skill in the art and relates to the firmness of the sausages after being cooked. Too high of a "snap" or "bite" indicates toughness or brittleness, which could cause the casing to burst during processing, while too low of such property indicates that the product is too elastic or mushy. Desirable "snap" or "bite" is retained by such natural casings even when the encased food product has been reheated in media such as hot water.

Unfortunately, due to the limited supply of such materials and the costs associated with their manufacture, the price of natural casings has risen substantially. Further, many varieties of vegetable or vegetarian sausages have been developed, with the result that there is a need for casings which provide the desirable properties of natural casings but which are not of animal origin. In this regard, there is also a need for casing materials which can meet both Halal and Kosher certification requirements.

One material which has been employed to meet these needs is alginate. Thus, for example, GB807863 describes the co-extrusion of sausage meat and a solution containing alginate, to form a continuous length of sausage, which is then passed through a bath containing calcium chloride, which causes the alginate to gel. EP1311165 describes a composition comprising 2-7 weight percent alginate and galactomannans being co-extruded around a food product and then contacted with a gelling agent so as to gel the alginate to form an edible casing.

However, one issue associated with the use of alginates in sausage coatings is that such coatings may not exhibit desirable adhesion to the food dough. As is discussed in WO 2014/007630 (Le Paih et al), at page 3, lines 4-12, this lack of adhesion can lead to unwanted deformation and discoloration of the coating due to evaporation of moisture in the coating. Such lack of adhesion can also lead to the formation of air bubbles between the food dough and the casing during cooking, resulting in an unappealing product and/or insufficient cooking at least locally. WO 2014/007630 proposes to overcome this lack of adhesion by adding an acidic buffer to the alginate solution. The addition of such acid is said to increase the hydrogen bonding between the gelling agent and the proteins present in the food particles (see page 6, lines 26 et seq.). While the addition of such an acidic buffer may improve the adhesion of alginate casings when certain types of fillings are employed, as is demonstrated in Comparative Experiment C below, this approach is unsuccessful when employed in fine emulsion-type sausages, apparently because insufficient hydrogen bonding occurs with the proteins in such an emulsion.

Accordingly, it would be desirable to possess alginate coated sausages made from fine emulsion fillings which exhibit desirable adhesion of such alginate coating to such interior filling, as well as to possess a process for producing such sausages.

Traditionally, fine emulsion sausages have been processed in a smoke room in which the sausage links are sequentially dried, smoked, cooked (with steam), and cooled (by showering) in a batch-type procedure. During the drying process outside air is heated up to the desired temperature (e.g. 60° C) and passed through the chamber containing the rack with sausages and blown out through ventilators. During the drying time the relative humidity in the chamber decreases as water is removed from the surface of the sausages. However, after a certain drying time the relative humidity in the chamber may vary from batch to batch depending on the humidity and temperature of the outside air as well as the amount of sausages in the chamber and also on the construction of the smoke house (not all smoke houses have identical performance parameters). One consequence of this is that the relative humidity in the chamber after a certain drying time is not constant. It has now been unexpectedly found that the presence of a too high relative humidity during the drying step greatly adversely affects the binding of alginate coatings to the interior filling; and that reducing the relative humidity in the chamber to 15 % or less during the drying step will permit the manufacture of alginate-cased fine emulsion sausages which exhibit desirable casing-filling adhesion.

### SUMMARY OF THE INVENTION

In one aspect, the present invention is directed to a fine emulsion sausage comprising:
(a) a filling which is produced from a fine meat and/or vegetable emulsion; and
(b) a coating which comprises an alginate having an average of at least 50% adjacent (1,4)a-L-guluronate units. and a sparingly soluble calcium compound;
wherein:
(i) such filling and coating have been coextruded; and
(ii) after reheating in water at 90° C for 5 minutes at least 50% of the casing remains adhered to the filling.

In another aspect, the present invention is directed to a process for producing a fine emulsion sausage comprising the steps of:
a) coextruding a casing paste comprising (i) alginate and (ii) a sparingly soluble calcium compound; and a fine emulsion filling to form a co-extruded product;
b) contacting such co-extruded product with a solution comprising calcium ions, thereby causing the alginate to gel to form a coated sausage; and
c) drying such coated sausage at a relative humidity of less than 15 % at between 50 and 90° C.

### DETAILED DESCRIPTION OF THE INVENTION

In one aspect, the present invention is directed to a fine emulsion sausage comprising: (a) a filling which is produced from a fine meat and/or vegetable emulsion; and (b) a coating which comprises an alginate and a sparingly soluble calcium compound; wherein: (i) such filling and coating have been coextruded; and (ii) after reheating in water at 90° C for 5 minutes at least 50% of the casing remains adhered to the filling.

As is employed herein, the term "meat and/or vegetable emulsion" means a mixture comprising (a) finely chopped meat and/or vegetable protein; (b) fat and/or vegetable oil; and (c) water and/or ice. Such mixtures may further comprise those additives conventionally employed in the production of such emulsions including spices, sweeteners, preservatives, and the like.

When meat emulsions are employed, meats such as beef, pork and veal or mixtures thereof are typically employed, although other meats such as chicken and/or turkey may also be used. While all beef frankfurters only contain beef; most frankfurters contain a mixture of pork and beef. When vegetable emulsions are employed, often a mixture of a plant protein (such as soy protein isolate) and vegetable oil are used in place or meat and fat. Mixed meat and vegetable emulsions may be employed to produce low fat sausages.

As is employed herein, the term "fine emulsion" (including the term "fine meat and/or vegetable emulsion") means an emulsion in which the meat and/or vegetable particles present possess an average particle size of 5 mm or less.

The fine emulsions employed in the sausages of this invention may be prepared by processes well known to those of skill in the art. These processes include a two phase process wherein: in the first step the meat is mixed with the curing salts and ice and chopped to extract meat protein which is necessary for the formation of a stable emulsion; and in the second step fats, fatty meats, sweeteners, spices and other additives are added with additional water to form the emulsion. These processes also include one-step simultaneous meat and fat cutter treatment. These processes are described in the FAO document "Production of Emulsion-Type Sausages" discussed above, which document is hereby incorporated by reference.

The casing material of the sausages of this invention are prepared from a casing paste which comprises at least 50% by weight alginate based upon the total weight of the dry components in such paste. In certain embodiments such casing paste comprises at least 60% or at least 75% alginate, based upon the total weight of the dry components in such paste.

The casing paste may additionally comprise a minor amount of a protein such as dairy protein, animal protein, vegetable protein and mixtures thereof. Such a protein may be used to modify the appearance and properties of the casing, both before and after cooking.

As is employed herein, the term "casing paste" as used herein refers to any alginate containing composition which is suitable for applying to the exterior of a material to be cased in the method of the invention. The term "suitable for co-extrusion" as employed herein means that the paste possesses a rheology suitable for being co-extruded onto the exterior of the food product to be cased. The casing formulations suitable for co-extrusion will typically have a viscosity in the range of 180-400 mPa, when measured at 1% at 20° C using Brookfield type RV (e.g. RVT, RVF, RVTDV) with Brookfield RV spindle 2.

The alginates employed in the practice of this invention will typically possess a molecular weight such that they exhibit a viscosity in the range of 300-1,000 mPa. when measured at 1% at 20° C using Brookfield type RV (e.g. RVT, RVF, RVTDV) with Brookfield RV using the appropriate spindle for the viscosity range in question. Preferably, such alginates will exhibit a viscosity of between 400 and 800; more preferably between 450 and 650 mPa when so measured.

Although the alginates employed may possess any relative content of (1,4)β-D-mannuronate ("M") and (1,4)α-L-guluronate ("G"), in certain embodiments the alginate(s) employed in the practice of the present invention possess an average of at least 50 percent adjacent G units (i.e, units containing one G-G block). Preferably such alginate(s) will possess an average of at least 52 percent adjacent G units; and more preferably such alginate(s) will possess an average of at least 55 percent or more of adjacent G units, as such higher the content of adjacent G units results in improved casing properties.

In certain embodiments, the alginate employed in the film-forming composition comprises alginate derived from *Laminaria hyperborea* (stem).

The casing paste employed in the present invention comprises a sparingly soluble calcium compound. As is employed herein, the term "sparingly soluble" when applied to calcium compounds means that the calcium compound has a low solubility product. The solubility product is the product of the equilibrium molar concentrations of the ions in a saturated solution of a compound in water. The sparingly soluble calcium compounds employed in the practice of the present invention typically has a solubility product at 25 C° of not more than 10⁻³, preferably not more than 10⁻⁴, more preferably not more than 10⁻⁵ at the pH of the casing paste to be co-extruded. The sparingly soluble calcium compound is preferably selected from the group consisting of calcium carbonate, calcium citrate, calcium oxide, calcium phosphates, calcium silicate, calcium sulphate, calcium sulphide, calcium tartrate and mixtures thereof. The sparingly soluble calcium compound is preferably calcium sulphate or di-calcium phosphate or calcium carbonate.

The alginate paste employed in the practice of this invention may optionally additionally comprise a thickener to adjust casing properties like elasticity. The thickener is typically selected from the group consisting of native starch, modified starch, cellulose gum, cellulose gel, guar gum, tara gum and xanthan gum, carrageenan, gum tragacanth and mixtures thereof. The thickener may optionally be a cold-soluble thickener, for example, a galactomannan.

The casing paste may additionally comprise a casing appearance modifier, which is typically a low molecular weight substance such as a simple sugar monomer (e.g. dextrose), an oligomer (e.g. maltodextrin) and/or vegetable oil and/or a non-soluble opacifier like microcrystalline cellulose.

The alginate casing paste may additionally comprise a sequestrant to help prevent the alginate from gelling before the casing paste is applied. A sequestrant is a chelating agent that has a high affinity for calcium. In order to function as a sequestrant, the sequestrant should have a greater affinity for calcium than the alginate does. Thus the sequestrant will prevent calcium-alginate gelling until the sequestrant has been saturated with calcium ions.

Illustrative of the sequestrants which may be employed are trisodium phosphate, tetrasodium pyrophosphate, sodium hexametaphosphate, sodium tripolyphosphate, sodium citrate, sodium carbonate, ethylene diamine tetra-acetate (EDTA), glucono delta-lactone, sodium gluconate, potassium gluconate, and mixtures thereof. Sodium phosphates are preferred sequestrants.

The amount of sequestrant employed will in general depend on a number of factors including the solubility product of the sparingly soluble calcium compound employed as well as the impact of different pH values on the solubility product; the time between the mixing of the sparingly soluble calcium compound into the alginate paste and the application of the casing paste; and the type of sequestrant used. If too little sequestrant is used then it may become saturated before application. If a large excess of sequestrant is used then it may deplete the sparingly soluble calcium salt leaving no additional calcium ions for the alginate. If the type of sparingly soluble calcium compound used is virtually insoluble at the pH of the paste for co-extrusion, which is neutral to slightly basic pH according to this invention (very low solubility product like for di-calcium phosphate (1 x 10⁻⁷ at 25° C) or for calcium carbonate (3.8 x 10⁻⁹ at 25° C), then the sole function of the sequestrant is merely as a technical aid for ensuring that calcium ions in the water used to make the paste do not cause the alginate to pre-gel or increase the viscosity of the paste to an undesirable level. However, when the sparingly soluble calcium compound has a higher solubility product like calcium sulphate (4.9 x 10⁻⁵ at 25 °C) at the pH of the paste for co-extrusion, then the time between the mixing of the sparingly soluble calcium compound into the alginate paste and the application of the casing paste becomes important.

The casing paste will typically be prepared by mixing one or more alginate containing materials with water, together with any other components such as a thickener. The thickener may optionally be mixed with the alginate containing materials prior to the mixing with water.

The sausages of this invention, after reheating in water at 90° C for 5 minutes, will exhibit unexpectedly desirable adhesion of the alginate coating to the filling, as the casing is perceived to be firmly attached to the sausage filling as observed by one of ordinary skill in the art for an emulsion sausage, with at least 50% of the casing remains adhered to the filling. More preferably, at least 70 % of the casing will remain adhered to the filling after such reheating.

This degree of adhesion is measured by reheating the sausages in water at 90 C° for 5 minutes; cutting the reheated sausages into 1 cm pieces; peeling the casing off of such pieces; and calculating the percent of the casing surface to which filling is adhered.

The fine emulsion sausages of this invention are produced by a process comprising the steps of:
a) coextruding a casing paste comprising (i) alginate and (ii) a sparingly soluble calcium compound; and a fine emulsion filling to form a co-extruded product;
b) contacting such co-extruded product with a solution comprising calcium ions, thereby causing the alginate to gel to form a coated sausage; and
c) drying such coated sausage at a relative humidity of less than 15 % at a temperature between 50 and 90° C. This step typically requires a period of 20 to 40 minutes, but may be shorter or longer (e.g., for 15 minutes or less to 1.5 hours or more) based upon factors such as the relative humidity in the outside air, the volume of sausages in the chamber, the model and performance of the smoke house, etc. The optimal drying time can be easily determined by one of ordinary skill in the art.

The casing paste is applied to the exterior of the emulsion to be cased by co-extrusion. A typical co-extrusion apparatus might comprise an inner nozzle for the material to be cased and an outer nozzle for the casing paste. The inner nozzle is arranged within the outer nozzle. The nozzles may, for example, be concentric. In that case, the inner nozzle may, for example, be circular and the outer nozzle may, for example, be an annulus. Suitable apparati for the preparation of the co-extruded product of step a) are commercially available, and are employed to produce conventional coextruded sausages.

In step b) the co-extruded product is contacted with a solution containing calcium ions such that the alginate coating gels to form a coated sausage. The solution comprising calcium ions may, for example, be contained in a bath, through which the co-extruded product passes. The solution comprising calcium ions may alternatively, or additionally, be sprayed onto the co-extruded product. The solution should contain dissolved calcium ions in a concentration sufficient to gel the alginate within the desired time. The solution will typically comprise one or more soluble calcium salts. The solution comprising calcium ions may, for example, be a solution of calcium chloride. The solution could furthermore have an acidic pH through the addition of acids such as acetic acid.

The alginate coating of the sausages produced in step b) typically possess a high water content, often as much as 90% or higher. Applicants have found that the conditions under which such coatings are dried will significantly affect the extent to which the dried casing will adhere to the sausage filing. In this regard, it has been unexpectedly found that by drying the sausages under certain temperature and relative humidity conditions, emulsion sausages having an alginate coating unexpectedly desirable adhesion may be produced.

Specifically, the sausage product produced in step b) are dried at a relative humidity of less than 10% at between 50 and 90° C. Such drying step preferably is conducted at between 50 and 80° C, more preferably of between 60 and 75° C. This step typically requires a period of 20 to 40 minutes, but may be shorter or longer (e.g., for 15 minutes or less to 1.5 hours or more) based upon factors such as the relative humidity in the outside air, the volume of sausages in the chamber, the model and performance of the smoke house, etc. The optimal drying time can be easily determined by one of ordinary skill in the art.

### EXAMPLES

The following examples are provided to illustrate the invention in accordance with the principles of this invention, but are not to be construed as limiting the invention in any way except as indicated in the appended claims.

### Example 1 and Comparative Experiments A and B

Fine emulsion Vienna-type sausages were produced employing a variety of drying conditions. In Comparative Experiment A, drying was conducted to a relative humidity greater than 20%; in Comparative Experiment B no drying step was employed; in Example 1, the humidity in the drying chamber at the end of the drying time was below 10%.

The sausage recipe employed to produce the meat emulsion filling was as follows:

| | |
|---|---|
| - Beef II: | 18.0% |
| - Pork III: | 30.0% |
| - Fat: | 24.0% |
| - Jowls: | 5.0% |
| - Ice: | 19.3% |
| - Nitrite salt: | 1.7% |
| - Phosphate: | 0.15% |
| - Ascorbic acid: | 0.05% |
| - Spices: | 0.8% |

The meat emulsion was prepared as follows:
Procedure in bowl chopper: Beef II, Pork III, nitrite salt, phosphate and 2/3 of ice were added to the chopper and chopped at 4000 rpm at 8 ° C.

The casing paste was composed as follows:

| | |
|---|---|
| Protanal® ME 4049* (FMC Corporation) | 11.0% |
| Water: | 89.0% |

| | |
|---|---|
| * A commercially available product comprising sodium alginate, a sparingly soluble calcium compound, and other ingredients. | |

### Process to make the Alginate paste:

The water was added to the chopper. The powders were added and the mixture was chopped at full speed of knives (-4500 rpm) and bowl for 5 minutes. Then the chopper was opened and scraped down followed by another 5 minutes of chopping at full speed of knives and bowl under vacuum.

### Co-extrusion process:

The meat preparation was coextruded with the paste, while spraying with the brine using a ConProLink system: Caliber 23, 100 gram (25cm long).
Brine composition: 30% CaCl₂ and 2% of acetic acid (80% concentration)

### Cooking/smoking program:

**Example 1:**

| | |
|---|---|
| Drying: | 20-30 minutes at 50-60 Deg. C Relative Humidity RH in the |
| chamber below | 10% at the end of the drying time. |
| Smoking: | 10-15 minutes at 60 Deg. C |
| Cooking: | 10-15 minutes at 78 Deg. C with water steam |
| Cooling: | interval showering for ∼ 10 minutes. |

After cooling the sausages were vacuum packed and stored.

**Comparative Experiment A:**

| | |
|---|---|
| Drying: | 20-30 minutes at 50-60 Deg. C Relative Humidity RH >20% |
| in the chamber | at the end of the drying time. |
| Smoking: | 10-15 minutes at 60 Deg. C |
| Cooking: | 10-15 minutes at 78 Deg. C with water steam |
| Cooling: | interval showering for ∼ 10 minutes. |

After cooling the sausages were vacuum packed and stored.

**Comparative Experiment B:**

| | |
|---|---|
| Drying: | No drying |
| Smoking: | No Smoking |
| Cooking: | 30 minutes at 90 Deg. C in water |
| Cooling: | No cooling |

After cooling the sausages were vacuum packed and stored.

After 2 weeks storage, samples of each of the sausages produced were reheated in water at ∼ 90°C for 5 minutes. The cooked sausages were cut into 1 cm pieces and casing was peeled off. The percent adherence of the casing to the sausage filling was determined. The results of such evaluation are presented in the Table below. In addition to enhanced adhesion, the sausages of Example 1 were found to exhibit casing snap or bite properties close to those of a natural casing.

| Example or Comparative Experiment | Drying Conditions (Relative Humidity in the chamber) | Smoking | Cooking | Percent Casing Adhesion to Filling |
|---|---|---|---|---|
| 1 | <10% | Yes | Yes | 74 |
| A | >20% | Yes | Yes | 34 |
| B | No Drying | No | Yes | 0 |

The above results show that conducting the drying step until low humidity conditions are reached in the chamber unexpectedly increases the adhering of the alginate casing to the sausage filling.

### Example 2 and Comparative Experiments C and D

Fine emulsion Vienna-type sausages were produced in accordance with the present invention (Example 2) as well as in accordance with the process disclosed in Example 1 of Patent Application WO 2014/007630 (Comparative Experiment C), which discloses that the use of an acidic buffer solution will enhance the binding of an alginate casing to proteins contained within the sausage stuffing. As a further comparison, the properties of a commercial collagen-cased product were also evaluated (Comparative Experiment D).

### A. Example 2: Production of Fine Emulsion Sausages employing the process of this invention

### 1. Stuffing Emulsion Recipe:

| | |
|---|---|
| - Beef II: | 18.0% |
| - Pork III: | 30.0% |
| - Fat: | 24.0% |
| - Jowls: | 5.0% |
| - Ice: | 19.3% |
| - Nitrite salt: | 1.7% |
| - Phosphate: | 0.15% |
| - Ascorbic acid: | 0.05% |
| - Spices: | 0.8% |

### 2. Process to make the stuffing emulsion:

Procedure in bowl chopper: Beef II, Pork III, nitrite salt, phosphate and 2/3 of ice were added to the chopper and chopped at 4000 rpm at 8 ° C.

### 3. Casing Paste Formulation

| | |
|---|---|
| Protanal® ME 4049 | 11.0% |
| Water: | 89.0% |

### 4. Process to make the Casing Paste:

The water was added to the chopper. The powders were added and the mixture was chopped at full speed of knives (∼4500 rpm) and bowl for 5 minutes under vacuum.

### 5. Co-extrusion process:

The meat preparation was coextruded with the paste, while spraying with the brine using a ConProLink system: Caliber 23, 100 gram (25cm long).

### 6. Brine composition: 30% CaCl₂ and 2% of acetic acid (80% concentration)

### 7. Cooking/smoking program:

| | |
|---|---|
| Drying: | 20-30 minutes at 50-60°C Relative Humidity RH <10% in the |
| chamber at the | end of the drying time |
| Smoking: | 10-15 minutes at 60°C |
| Cooking: | 10-15 minutes at 78°C with water steam |
| Cooling: | interval showering for ∼ 10 minutes. |

After cooling the sausages were vacuum packed and evaluated during the shelf life (> 3 months) by heating the sausages in water at ∼ 90 C. 5 minutes.

### B. Comparative Example C:

Fine emulsion sausage prepared following process described in Application WO 2014/007630.
1. Stuffing Emulsion Recipe: identical to A.1 above.
2. Process to make the stuffing emulsion: identical to A.2 above.
3. Casing Paste Formulation:

| | |
|---|---|
| Alginate: | 5.0% |
| Citric acid: | 3.8% |
| Na citrate: | 1.9% |
| Water: | 89.2% |

4. Process to make the Casing Paste: Citric acid and Na citrate were dissolved. The alginate was added into the buffer solution and the mixture was chopped at full speed of knives (∼4500 rpm) and bowl for 5 minutes under vacuum.
5. Co-extrusion process: Identical to A.5 above.
6. Brine composition: Identical to A.6 above.
7. Cooking/smokingprogram: Identical to A.7 above.

### C. Evaluation Methods

### -Adhesion evaluation:

After reheating the sausages in water at ∼ 90°C during 5 minutes, the sausages were immediately cut in 1 cm pieces and casing was peeled off. The % of meat adhesion to the casing was calculated by surface of meat that stays in the casing.

### -Visual integrity of the casing:

After reheating visual evaluation were made to evaluate if the casings fragment and detach in flakes.

### -Snap/Bite evaluation:

Heated sausages were cooled to consumption temperature (40-50° C) and placed underneath the Texture Analyzer. The sausages were punctured with a rounded prove, and the maximum force applied until break and the distance at snap were measured.

### Results:

### Visual Integrity of the Casing:

Inventive Example 2 - excellent appearance similar to that of commercial collagen casing.

Comparative Experiment 2 - Casings fragment and detach in flakes leaving a poor surface appearance of the sausage.

### Adhesion evaluation:

For inventive Example 2, the casing were stable and remain attached, more than 50% of casing adhesion to meat.

For Comparative Experiment 2. Not possible to measure due to the flaking of the casing.

### Snap/Bite Evaluation (average of 10 samples):

| Example or Comparative Experiment | Force Until Snap - grams (Standard Deviation) | Distance at Snap - mm (Standard Deviation) |
|---|---|---|
| 2 | 1551.91 (180.88) | 5.26 (0.81) |
| C | 1221.16 (98.23) | 5.41 (0.33) |
| D | 1422.05 (132.86) | 5.39 (0.38) |

The above results indicate that the alginate casings of the sausages of this invention, which comprise a sparingly soluble calcium salt, exhibit casing snap or bite properties similar to those exhibited by collagen casings. In contrast, emulsion sausages produced by the method of Patent Application WO 2014/007630 did not exhibit desirable bite, even when dried at low relative humidity.

### Example 3 - comparing sausages produced dried under the same conditions but produced with different dry matter content in the casing paste

Meat formulation and procedure: Same as described above under example 1. Paste formulation:
3a) 11% Protanal® ME 4049 plus 89% water
3b) 9.2% Protanal® ME 4049 plus 90.8% water
3c) 7.3% Protanal® ME 4049 plus 92.7% water
Procedure for making the paste: Same as described above under example 1.
Brine composition: Same as described above under example 1.

### Co-extrusion process:

The meat preparation was coextruded with the paste, while spraying with the brine using a ConProLink system: Caliber 19, 45 gram (17cm long).

Drying: 20 minutes at 85 °C, where after the relative humidity in the chamber was 5%.

Smoking/cooking/cooling: Same as described above under example 1.

After cooling the sausages were vacuum packed and pasteurized for 30 minutes at 85 °C.

### Adhesion evaluation:

After reheating the sausages in water at ∼ 90 Deg. C during 5 minutes, the sausages were immediately cut in 1 cm pieces and casing was peeled off. The proportion of the peeled casing having meat adhering to it was calculated.

The results show, as seen in the table below, that when applying the same drying conditions, the casings with the lower use level of Protanal® ME 4049 (9.2% and 7.3%) have an increased adhesion to the meat, which could be a reflection of how easy the water is being removed from the casing as a function of the dry matter content.

| Example | 3a | 3b | 3c |
|---|---|---|---|
| Drying Conditions Relative Humidity (RH) | RH < 10% | RH < 10% | RH < 10% |
| Protanal ME 4049 Use Level | 11% | 9.2% | 7.3% |
| Smoking | Yes | Yes | Yes |
| Cooking | Yes | Yes | Yes |
| Casing Adherence | Acceptable | Very Good | Very Good |
| % of Casing Adhesion to the Meat | 74 | 100 | 100 |
| Casing Separation from the Sausage Meat after Cooking 5 Minutes | Casing remains attached | Casing fully adhering to the meat | Casing fully adhering to the meat |

## Claims

1. A process for producing a fine emulsion sausage comprising the steps of:
a) coextruding a casing paste comprising (i) alginate and (ii) a sparingly soluble calcium compound; and an emulsion filling to form a co-extruded product;
b) contacting such co-extruded product with a solution comprising calcium ions, thereby causing the alginate to gel to form a coated sausage; and
c) drying such coated sausage between 50 and 90°;
**characterised in that** the sausage is dried at a relative humidity of less than 15% in a chamber.

2. The process of claim 1 wherein the sausage is dried at a relative humidity of less than 10% in the chamber.

3. The process of claim 1 or claim 2 wherein the alginate used to produce the coating has an average of at least 50% adjacent (1,4)α-L-guluronate units.

4. A fine emulsion sausage produced by the process described in any of claims 1-3, comprising:
(a) a filling which is produced from a meat and/or vegetable emulsion; and
(b) a coating which comprises an alginate having an average of at least 50% adjacent (1,4)α-L-guluronate units and a sparingly soluble calcium compound;
wherein:
(i) such filling and coating have been coextruded; and
(ii) after reheating in water at 90° C for 5 minutes at least 50% of the casing remains adhered to the filling.

5. The sausage of claim 4 wherein the filling is produced from a meat emulsion.

6. The sausage of claim 4 or claim 5wherein the coating comprises at least 60% by weight of alginate of the dry components of the coating.

7. The sausage of any of claims 4-6 wherein the alginate used to produce the coating has a viscosity of 300 to 1,000 mPa when measured at 1% at 20° C using a Brookfield type RV.

## Patentansprüche

1. Verfahren für die Herstellung einer Wurst aus feiner Emulsion, umfassend die Schritte des:
a) Coextrudierens einer Hüllepaste umfassend (i) Alginat und (ii) eine kaum lösliche Calciumverbindung und eine Emulsionsfüllung zum Bilden eines coextrudierten Produkts;
b) Kontaktierens des coextrudierten Produkts mit einer Lösung umfassend Calciumionen, wodurch das Alginat zur Gelbildung gebracht wird, um eine beschichtete Wurst zu bilden; und
c) Trocknens der beschichteten Wurst bei 50 bis 90°;
**dadurch gekennzeichnet, dass** die Wurst bei einer relativen Feuchte von weniger als 15 % in einer Kammer getrocknet wird.

2. Verfahren nach Anspruch 1, wobei die Wurst bei einer relativen Feuchte von weniger als 10 % in der Kammer getrocknet wird.

3. Verfahren nach Anspruch 1 oder Anspruch 2, wobei das Alginat, das zum Herstellen der Beschichtung verwendet wird, im Durchschnitt mindestens 50 % anliegende (1,4-)α-L-Glucoronateinheiten aufweist.

4. Wurst aus feiner Emulsion hergestellt durch das Verfahren, das in irgendeinem der Ansprüche 1-3 beschrieben ist, umfassend:
a) eine Füllung, die aus einer Fleisch- und/oder Gemüseemulsion hergestellt ist; und
b) eine Beschichtung, die ein Alginat umfasst, das einen Durchschnitt von mindestens 50 % anliegende (1,4-)α-L-Glucoronateinheiten und eine kaum lösliche Calciumverbindung aufweist;
wobei
(i) eine derartige Füllung und Beschichtung coextrudiert worden sind; und
(ii) nach Aufwärmen in Wasser bei 90 °C 5 Minuten lang mindestens 50 % der Hülle an der Füllung haften bleiben.

5. Wurst nach Anspruch 4, wobei die Füllung aus einer Fleischemulsionen hergestellt ist.

6. Wurst nach Anspruch 4 oder Anspruch 5, wobei die Beschichtung mindestens 60 Gew.-% Alginat, auf die trockenen Komponenten der Beschichtung bezogen, umfasst.

7. Wurst nach irgendeinem der Ansprüche 4-6, wobei das zum Herstellen der Beschichtung verwendete Alginat eine Viskosität von 300 bis 1000 mPa aufweist, wenn sie bei 1 % bei 20 °C unter Anwendung eines RV vom Typ Brookfield gemessen wird.

## Revendications

1. Procédé de production d'une saucisse à émulsion fine comprenant les étapes de:
a) coextrusion d'une pâte à garnir comprenant (i) de l'alginate et (ii) un composé calcium peu soluble; et un fourrage en émulsion afin de former un produit co-extrudé;
b) mise en contact d'un tel produit co-extrudé avec une solution comprenant des ions calcium, amenant ainsi l'alginate à gélifier pour former une saucisse enrobée; et
c) séchage d'une telle saucisse enrobée entre 50 et 90°;
**caractérisé en ce que** la saucisse est séchée à une humidité relative inférieure à 15 % dans une chambre.

2. Procédé selon la revendication 1, la saucisse étant séchée sous une humidité relative inférieure à 10 % dans la chambre.

3. Procédé selon la revendication 1 ou la revendication 2, l'alginate utilisé pour produire l'enrobage ayant une moyenne d'au moins 50 % de motifs (1,4)α-L-glucuronate adjacents.

4. Saucisse à émulsion fine produite selon le procédé décrit selon l'une quelconque des revendications 1 à 3, comprenant:
(a) un fourrage qui est produit à partir d'une émulsion de viande et/ou de légume; et
(b) un enrobage qui comprend un alginate ayant une moyenne d'au moins 50 % de motifs (1,4)α-L-glucuronate adjacents et un composé calcium peu soluble; où:
(i) de tels fourrage et enrobage ont été coextrudés; et
(ii) après le réchauffage dans l'eau à 90°C durant 5 minutes au moins 50 % de l'enveloppe demeurent adhérés au fourrage.

5. Saucisse selon la revendication 4, le fourrage étant produit à partir d'une émulsion de viande.

6. Saucisse selon la revendication 4 ou la revendication 5, l'enrobage comprenant au moins 60 % en poids d'alginate par rapport aux composants secs de l'enrobage.

7. Saucisse selon l'une quelconque des revendications 4 à 6, l'alginate utilisé pour produire l'enrobage ayant une viscosité de 300 à 1 000 mPa lorsque mesurée à 1 % à 20°C en utilisant un viscosimètre rotatif de Brookfield.
